# EUROPÄISCHE PATENTSCHRIFT

(11) **EP 3 283 854 B1**
(45) Veröffentlichungstag und Bekanntmachung des Hinweises auf die Patenterteilung: **06.04.2022**
(21) Anmeldenummer: 16706663.8
(22) Anmeldetag: 29.02.2016
(51) Int. Cl.: G01F 1/684, G01F 15/12

(54) **SENSOR ZUR BESTIMMUNG WENIGSTENS EINES PARAMETERS EINES DURCH EINEN MESSKANAL STRÖMENDEN FLUIDEN MEDIUMS**
SENSOR FOR DETERMINING AT LEAST ONE PARAMETER OF A FLUID MEDIUM FLOWING THROUGH A MEASUREMENT CHANNEL
CAPTEUR POUR DÉTERMINER AU MOINS UN PARAMÈTRE D'UN MILIEU FLUIDE S'ÉCOULANT DANS UN CONDUIT DE MESURE

(30) Priorität: 15.04.2015 DE 102015206708
(43) Veröffentlichungstag der Anmeldung: 21.02.2018
(73) Patentinhaber: Robert Bosch GmbH, 70442 Stuttgart (DE)
(72) Erfinder: KONZELMANN, Uwe, 71679 Asperg (DE); SOMMER, Edda, 70563 Stuttgart (DE); MARKOV, Alexander, 70469 Stuttgart (DE)
(86) Internationale Anmeldenummer: PCT/EP2016/054206
(87) Internationale Veröffentlichungsnummer: WO 2016/165868

(56) Entgegenhaltungen:
- EP-A1- 2 072 973
- WO-A1-2015/189029
- DE-A1- 10 253 691
- DE-A1-102005 057 574
- DE-A1-102005 057 575
- DE-T5-112012 002 327

## Beschreibung

### Stand der Technik

Aus dem Stand der Technik sind zahlreiche Verfahren und Vorrichtungen zur Bestimmung einer Strömungseigenschaft fluider Medien, also von Flüssigkeiten und/oder Gasen, bekannt. Bei den Strömungseigenschaften kann es sich dabei um grundsätzlich beliebige physikalisch und/oder chemisch messbare Eigenschaften handeln, welche eine Strömung des fluiden Mediums qualifizieren oder quantifizieren. Insbesondere kann es sich dabei um eine Strömungsgeschwindigkeit und/oder einen Massenstrom und/oder einen Volumenstrom handeln.

Die Erfindung wird im Folgenden insbesondere beschrieben unter Bezugnahme auf so genannte Heißfilmluftmassenmesser, wie sie beispielsweise in Konrad Reif (Hrsg.): Sensoren im Kraftfahrzeug, 1. Auflage 2010, Seiten 146-148 beschrieben sind. Derartige Heißfilmluftmassenmesser basieren in der Regel auf einem Sensorchip, insbesondere einem Siliziumsensorchip, mit einer Sensormembran als Messoberfläche oder Sensorbereich, welche von dem strömenden fluiden Medium überströmbar ist. Der Sensorchip umfasst in der Regel mindestens ein Heizelement sowie mindestens zwei Temperaturfühler, welche beispielsweise auf der Messoberfläche des Sensorchips angeordnet sind. Aus einer Asymmetrie des von den Temperaturfühlern erfassten Temperaturprofils, welches durch die Strömung des fluiden Mediums beeinflusst wird, kann auf einen Massenstrom und/oder Volumenstrom des fluiden Mediums geschlossen werden. Heißfilmluftmassenmesser sind üblicherweise als Steckfühler ausgestaltet, welcher fest oder austauschbar in ein Strömungsrohr einbringbar ist. Beispielsweise kann es sich bei diesem Strömungsrohr um einen Ansaugtrakt einer Brennkraftmaschine handeln.

Dabei durchströmt ein Teilstrom des Mediums wenigstens einen in dem Heißfilmluftmassenmesser vorgesehen Hauptkanal. Zwischen dem Einlass und dem Auslass des Hauptkanals ist ein Bypasskanal ausgebildet. Insbesondere ist der Bypasskanal derart ausgebildet, dass er einen gekrümmten Abschnitt zur Umlenkung des durch den Einlass des Hauptkanals eingetretenen Teilstroms des Mediums aufweist, wobei der gekrümmte Abschnitt im weiteren Verlauf in einen Abschnitt übergeht, in welchem der Sensorchip angeordnet ist. Der zuletzt genannte Abschnitt stellt den eigentlichen Messkanal dar, in dem der Sensorchip angeordnet ist.

Bei herkömmlichen Heißfilmluftmassenmessern der beschriebenen Art ragt in der Regel ein Sensorträger mit dem darauf angebrachten oder eingebrachten Sensorchip in den Messkanal hinein. Beispielsweise kann der Sensorchip in den Sensorträger eingeklebt oder auf diesen aufgeklebt sein. Der Sensorträger kann beispielsweise mit einem Bodenblech aus Metall, auf welchem auch eine Elektronik, eine Ansteuer- und Auswerteschaltung (beispielsweise mit einem Schaltungsträger, insbesondere einer Leiterplatte) aufgeklebt sein kann, eine Einheit bilden. Beispielsweise kann der Sensorträger als angespritztes Kunststoffteil eines Elektronikmoduls ausgestaltet sein. Der Sensorchip und die Ansteuer- und Auswerteschaltung können beispielsweise durch Bondverbindungen miteinander verbunden werden. Das derart entstandene Elektronikmodul kann beispielsweise in ein Sensorgehäuse eingeklebt werden und der gesamte Steckfühler kann mit Deckeln verschlossen werden.

Derartige Heißfilmluftmassenmesser müssen in der Praxis einer Vielzahl von Anforderungen genügen. Neben dem Ziel, einen Druckabfall an dem Heißfilmluftmassenmesser insgesamt durch geeignete strömungstechnische Ausgestaltungen zu verringern, besteht eine der hauptsächlichen Herausforderungen darin, die Signalqualität sowie die Robustheit der Vorrichtungen gegenüber Kontamination durch Öl- und Wassertröpfchen sowie Ruß-, Staub- und sonstige Festkörperpartikel weiter zu verbessern. Diese Signalqualität bezieht sich beispielsweise auf einen Massenstrom des Mediums durch den zu dem Sensorchip führenden Messkanal sowie gegebenenfalls auf die Verminderung einer Signaldrift und die Verbesserung des Signal-zu-Rauschen-Verhältnisses. Die Signaldrift bezieht sich dabei auf die Abweichung beispielsweise des Massenstroms des Mediums im Sinne einer Veränderung der Kennlinien-Beziehung zwischen dem tatsächlich auftretenden Massenstrom und dem im Rahmen der Kalibrierung bei der Fertigung ermittelten auszugebenden Signal. Bei der Ermittlung des Signal-zu-Rauschen-Verhältnisses werden die in schneller zeitlicher Folge ausgegebenen Sensorsignale betrachtet, wohingegen sich die Kennlinien- oder Signaldrift auf eine Veränderung des Mittelwertes bezieht.

Die DE 10 2005 057 574 A1 beschreibt einen Heißfilmluftmassenmesser mit Gradientenfeld-Ölabscheidung.

Die DE 10 2005 057 575 A1 beschreibt einen Heißfilmluftmassenmesser mit elektrischer Ölabscheidung.

Die DE102 53 691 A1 beschreibt einen Sensor gemäß dem Oberbegriff des Anspruchs 1.

Trotz der zahlreichen Vorteile der aus dem Stand der Technik bekannten Verfahren zur Vermeidung der Verschmutzung des Sensorelements durch beispielsweise Staubpartikel beinhalten diese noch Verbesserungspotenzial. So werden auf den Sensorchip auftreffende Partikel, die eine elektrische Ladung tragen, nur unzureichend vom Sensorchip abgehalten.

Offenbarung der Erfindung Es wird daher ein Sensor zur Bestimmung wenigstens eines Parameters eines durch einen Kanal strömenden fluiden Mediums vorgeschlagen, welcher die Nachteile bekannter Verfahren und Strategien zumindest weitgehend vermeiden kann und bei dem eine verbesserte Funktion dadurch gewährleistet werden kann, dass der Sensor robuster gegenüber Verschmutzung bei gleichzeitig günstigerer Herstellbarkeit als bisherige Sensoren ist.

Ein erfindungsgemäßer Sensor zur Bestimmung wenigstens eines Parameters eines durch einen Kanal strömenden fluiden Mediums, insbesondere eines

Ansaugluftmassenstroms einer Brennkraftmaschine, weist ein Sensorgehäuse, insbesondere einen in ein Strömungsrohr eingebrachten oder einbringbaren Steckfühler, in dem der Messkanal ausgebildet ist, und mindestens einen in dem Messkanal angeordneten Sensorchip zur Bestimmung des Parameters des fluiden Mediums auf. Das Sensorgehäuse weist mehrere Kanalwände auf, die den Messkanal begrenzen. Der Sensorchip ist auf einem Sensorträger angeordnet. Zumindest im Bereich des Sensorträgers weisen mindestens eine erste Kanalwand der mehreren Kanalwände und eine zweite Kanalwand der mehreren Kanalwände, die sich von der ersten Kanalwand unterscheidet, zumindest teilweise magnetische Eigenschaften auf.

Der Teil der Kanalwände, der magnetische Eigenschaften trägt, definiert einen Bereich, welcher Einfluss auf die mögliche Anlagerung von Verschmutzungen im o.g. Sinne haben kann. Zumindest in diesem Bereich weist mindestens eine erste Kanalwand zumindest teilweise magnetische Eigenschaften auf. Es ist möglich, dass die erste Kanalwand auch außerhalb des Nahbereichs des Sensorträgers zumindest teilweise magnetische Eigenschaften aufweist. Zusätzlich weist eine zweite Kanalwand, die sich von der ersten Kanalwand unterscheidet, oder der Sensorträger selbst zumindest teilweise magnetische Eigenschaften auf.

Unter einer Kanalwand ist im Rahmen der vorliegenden Erfindung grundsätzlich jedes Bauteil zu verstehen das die Kanalstruktur und insbesondere den Messkanal begrenzt. Die Kanalwand kann Teil des Sensorgehäuses und/oder Teil eines Messkanaldeckels, der zum Verschließen der Kanalstruktur in dem Sensorgehäuse ausgebildet ist, sein.

Unter magnetischen Eigenschaften ist im Rahmen der vorliegenden Erfindung die Eigenschaft zu verstehen, die sich als Kraftwirkung zwischen Magneten, magnetisierten bzw. magnetisierbaren Gegenständen und bewegten elektrischen Ladungen äußert. Die Vermittlung dieser Kraft erfolgt über ein Magnetfeld, das von diesen Gegenständen erzeugt wird. Unter zumindest teilweise magnetischen Eigenschaften ist im Rahmen der vorliegenden Erfindung zu verstehen, dass nicht das vollständige Bauteil magnetische Eigenschaften aufweisen muss, sondern nur ein Teil davon.

Die erste Kanalwand und die zweite Kanalwand sind zum Ausbilden eines Magnetfels senkrecht zu einer Hauptströmungsrichtung des fluiden Mediums in dem Messkanal zumindest im Bereich des Sensorträgers ausgebildet. Enthalten die Kanalwände magnetische Anteile, so bilden sie ein Magnetfeld aus, unabhängig davon wie sie angeordnet sind. Unter der Hauptströmungsrichtung ist im Rahmen der vorliegenden Erfindung grundsätzlich ohne weitere Angabe die lokale Strömungsrichtung des fluiden Mediums am Ort des Sensors zu verstehen, wobei beispielsweise lokale Unregelmäßigkeiten, wie z. B. Turbulenzen unberücksichtigt bleiben können. Insbesondere kann unter der Hauptströmungsrichtung somit die lokale gemittelte Transportrichtung des strömenden fluiden Mediums am Ort der Sensoranordnung verstanden werden. Dabei bezieht sich die gemittelte Transportrichtung auf eine Transportrichtung, in der das fluide Medium im zeitlichen Mittel überwiegend strömt.

Der Sensorträger kann eine Oberseite aufweisen. Der Sensorchip kann in die Oberseite eingelassen ist. Insbesondere kann der Sensorchip derart in die Oberseite eingelassen sein, dass der Sensorchip fluchtend mit der Oberseite abschließt. Die erste Kanalwand und die zweite Kanalwand können zum Ausbilden eines Magnetfels senkrecht zu der Oberseite zumindest im Bereich des Sensorträgers ausgebildet sein.

Die erste Kanalwand ist dem Sensorchip zugewandt. Mit anderen Worten weist die erste Kanalwand dem Sensorchip zu und liegt diesem gegenüber. Der Messkanal ist im Querschnitt im Wesentlichen viereckig ausgeführt, verrundete Ecken und andere Geometrieelemente können prozess- bzw. designbedingt sein, und sind für diese Formdefinition daher nicht berücksichtigt. Somit ergibt sich eine obere, eine untere sowie eine - in Strömungsrichtung - rechte und linke die Strömung begrenzende Kanalwand. Obere und untere Kanalwände können magnetische Eigenschaften aufweisen. Wobei die untere Kanalwand dem in die Strömung ragenden Sensorchip abgewandt ist. Nun können eine erste, obere und eine zweite, untere Kanalwand sowie weitere Kanalwände magnetische Eigenschaften aufweisen. Die erste Kanalwand und die zweite Kanalwand der mehreren Kanalwände können zumindest teilweise magnetische Eigenschaften aufweisen, wobei die zweite Kanalwand dem Sensorchip abgewandt ist. Mit anderen Worten, weist bei einer Ausführungsform, bei der die erste Kanalwand und die zweite Kanalwand die magnetischen Eigenschaften aufweisen, die zweite Kanalwand einer Unterseite des Sensorträgers zu und liegt dieser gegenüber.

Die magnetischen Eigenschaften sind dadurch realisiert, dass die erste Kanalwand und die zweite Kanalwand oder der Sensorträger zumindest teilweise aus einem magnetischen Material hergestellt sind. Die erste Kanalwand und die zweite Kanalwand sind zumindest teilweise aus einem ferromagnetischen Material hergestellt. In Frage kommen Kunststoffe, die mit magnetischen Teilchen gefüllt sind, z.B. Samarium-Cobalt oder Strontiumferrit. Als Matrix kann Polybutylenterephthalat (PBT) dienen.

Die erste Kanalwand und die zweite Kanalwand sind zumindest teilweise aus Kunststoff und einem ferromagnetischen Material hergestellt. Das ferromagnetische Material kann in Form von Partikeln in den Kunststoff eingebettet sein. Alternativ kann das ferromagnetische Material in Form von einem Einlegeteil in den Kunststoff eingebettet sein.

Im Rahmen der vorliegenden Erfindung kann der Sensorträger ganz oder teilweise als Schaltungsträger, insbesondere als Leiterplatte, ausgestaltet sein oder Teil eines Schaltungsträgers, insbesondere einer Leiterplatte, sein. Beispielsweise kann der Schaltungsträger, insbesondere die Leiterplatte, einen Fortsatz aufweisen, welcher den Sensorträger bildet und welcher in den Kanal, beispielsweise den Messkanal eines Heißfilmluftmassenmessers, hineinragt. Der übrige Teil des Schaltungsträgers, insbesondere der Leiterplatte, kann beispielsweise in einem Elektronikraum, in einem Gehäuse des Sensors untergebracht sein.

Unter einer Leiterplatte ist dabei im Rahmen der vorliegenden Erfindung allgemein ein im Wesentlichen plattenförmiges Element zu verstehen, welches auch als Träger elektronischer Strukturen, wie beispielsweise Leiterbahnen, Anschlusskontakte oder Ähnliches, genutzt werden kann und vorzugsweise auch eine oder mehrere derartiger Strukturen aufweist. Grundsätzlich kommen dabei auch zumindest leichte Abweichungen von der Plattenform in Betracht und sollen begrifflich mit erfasst sein. Die Leiterplatte kann beispielsweise aus einem Kunststoffmaterial und/oder einem Keramikmaterial hergestellt sein, beispielsweise einem Epoxidharz, insbesondere einem faserverstärkten Epoxidharz. Insbesondere kann die Leiterplatte beispielsweise als Leiterplatte mit Leiterbahnen, insbesondere aufgedruckten Leiterbahnen (printed circuit board, PCB), ausgestaltet sein.

Auf diese Weise lässt sich das Elektronikmodul der Sensoranordnung stark vereinfachen und es lässt sich beispielsweise auf ein Bodenblech und einen separaten Sensorträger verzichten. Bodenblech und Sensorträger können durch eine einzige Leiterplatte ersetzt werden, auf welcher beispielsweise auch eine Ansteuer- und Auswerteschaltung der Sensoranordnung ganz oder teilweise angeordnet sein kann. Diese Ansteuer- und Auswerteschaltung der Sensoranordnung dient der Ansteuerung des mindestens einen Sensorchips und/oder der Auswertung der von diesem Sensorchip generierten Signale. Auf diese Weise lässt sich durch Zusammenfassung der genannten Elemente der Herstellaufwand der Sensoranordnung erheblich vermindern und der Bauraumbedarf für das Elektronikmodul stark verringern.

Der Sensor kann insbesondere mindestens ein Gehäuse aufweisen, wobei der Kanal in dem Gehäuse ausgebildet ist. Beispielsweise kann der Kanal einen Hauptkanal und einen Bypasskanal bzw. Messkanal umfassen, wobei der Sensorträger und der Sensorchip beispielsweise in dem Bypass- bzw. Messkanal angeordnet sein können. Weiterhin kann das Gehäuse einen von dem Bypasskanal getrennten Elektronikraum aufweisen, wobei das Elektronikmodul oder die Leiterplatte im Wesentlichen in dem Elektronikraum aufgenommen ist. Der Sensorträger kann dann als ein in den Kanal hineinragender Fortsatz der Leiterplatte ausgebildet sein. Diese Anordnung ist technisch vergleichsweise einfach zu realisieren, im Gegensatz zu den aufwändigen Elektronikmodulen, welche aus dem Stand der Technik bekannt sind.

Insbesondere in dem Fall, in welchem eine Leiterplatte als Sensorträger verwendet wird, jedoch auch in anderen Fällen und/oder unter Verwendung anderer Medien als Sensorträger, kann der Sensorträger zumindest teilweise als mehrschichtiger Sensorträger ausgestaltet sein. So kann der Sensorträger in einer so genannten Multilayer-Technik ausgestaltet sein und zwei oder mehrere miteinander verbundene Trägerschichten aufweisen. Beispielsweise können diese Trägerschichten wiederum aus einem Metall, einem Kunststoff oder einem Keramikmaterial oder einem Verbundmaterial hergestellt sein und durch Verbindungstechniken, wie z. B. Kleben, miteinander verbunden sein.

In diesem Fall, in welchem eine Multilayer-Technik verwendet wird mit mehreren Sensorschichten des Sensorträgers, kann die Anströmkante durch eine unterschiedliche Dimensionierung der Trägerschichten entgegen der Hauptströmungsrichtung des fluiden Mediums zumindest teilweise gestuft ausgeführt sein. Auf diese Weise lassen sich die Profile zumindest gestuft angenähert realisieren. Beispielsweise lassen sich auf diese Weise rechteckig geformte oder - angenähert durch eine Stufenform - zumindest näherungsweise rund-, abgerundete oder keilförmig geformte Profile in einer Schnittebene senkrecht zur Erstreckungsebene des Sensorträgers ausbilden. Der Sensorchip kann auf bzw. in dem Sensorträger derart angeordnet sein, dass dieser senkrecht zur lokalen Hauptströmungsrichtung ausgerichtet ist. Beispielsweise kann der Sensorchip rechteckig ausgestaltet sein, wobei eine Seite dieses Rechtecks senkrecht oder im Wesentlichen senkrecht, beispielsweise mit einer Ausrichtung, welche um nicht mehr als 10 Grad von der Senkrechten abweicht, zur lokalen Hauptströmungsrichtung angeordnet ist.

Der Sensorchip kann über mindestens eine elektrische Verbindung elektrisch kontaktiert werden. Beispielsweise kann der Sensorträger, insbesondere eine den Sensorträger bildende Leiterplatte oder ein Fortsatz dieser Leiterplatte, einen oder mehrere Leiterbahnen und/oder Kontaktpads aufweisen, welche mit entsprechenden Kontakten auf dem Sensorchip beispielsweise durch ein Bondingverfahren verbunden sind. In diesem Fall kann die elektrische Verbindung durch mindestens eine Abdeckung geschützt und von dem fluiden Medium getrennt werden. Diese Abdeckung kann insbesondere als so genannter Glob-Top ausgestaltet sein, beispielsweise als Kunststofftropfen und/oder Klebstofftropfen, welcher die elektrische Verbindung, beispielsweise die Bonddrähte abdeckt. Auf diese Weise lassen sich insbesondere auch Beeinflussungen der Strömung durch die elektrische Verbindung vermindern, da der Glob-Top eine glatte Oberfläche aufweist.

Ferner kann der Sensorchip mindestens einen Sensorbereich aufweisen. Dieser Sensorbereich kann beispielsweise eine Sensoroberfläche aus beispielsweise einem porösen, keramischen Material und/oder insbesondere eine Sensormembran sein. Die Sensormembran als Messoberfläche oder Sensorbereich kann von dem strömenden fluiden Medium überströmbar sein. Der Sensorchip umfasst beispielsweise mindestens ein Heizelement sowie mindestens zwei Temperaturfühler, welche beispielsweise auf der Messoberfläche des Sensorchips angeordnet sind, wobei ein Temperaturfühler stromaufwärts des Heizelements und der andere Temperaturfühler stromabwärts des Heizelements gelagert ist. Aus einer Asymmetrie des von den Temperaturfühlern erfassten Temperaturprofils, welches durch die Strömung des fluiden Mediums beeinflusst wird, kann auf einen Massenstrom und/oder Volumenstrom des fluiden Mediums geschlossen werden.

Ein Grundgedanke der vorliegenden Erfindung ist die Verwendung von Materialien mit magnetischen Eigenschaften zu verwenden, wie beispielsweise magnetische Kunststoffe. Das mit dem Sensor zu vermessende Fluid, wie beispielsweise Luft, ist oftmals mit Partikeln verunreinigt. Diese Partikel sind in der Regel elektrisch geladen. In einem Magnetfeld erfahren diese Partikel eine Lorentz-Kraft und werden quer zur Bewegungsrichtung und zu den Magnetfeldlinien abgelenkt. Im Strömungsbereich des Sensorchips angeordnete magnetisch aktive Bereiche können so gestaltet werden, dass unmittelbar oberhalb und unterhalb des Sensorchips oder auch in der Ebene des Sensorchips selbst, also im Sensorträger, magnetische Substanzen eingebracht sind, die so ausgerichtet sind, dass sich ein Magnetfeld quer zur Hauptströmungsrichtung des über den Sensorchip strömenden fluiden Mediums ergibt. Durch Zugabe von ferromagnetischem Material in den Kunststoff oder mittels eines magnetischen Einlegeteils ist dies realisierbar. Eine spezielle Kontaktierung dieser Bereiche ist nicht erforderlich. Die einströmenden Partikel werden quer abgelenkt und damit aus dem Sensierbereich befördert, der somit frei von Fremdstoffen, zumindest aber von geladenen Partikeln, entsprechend seiner Kennlinien-Beziehung durchströmende Luftmassen messen kann. Hiermit ist also eine wesentliche Steigerung der Robustheit des Sensors zu erwarten. Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine perspektivische Ansicht eines Sensors,
- Figur 2: eine vergrößerte Ansicht eines Elektronikmoduls des Sensors,
- Figur 3: eine Querschnittsansicht eines Sensors gemäß einer ersten Ausführungsform der beanspruchten Erfindung und
- Figur 4: eine Querschnittsansicht eines Sensors gemäß einer zweiten Ausführungsform, die nicht gemäß der beanspruchten Erfindung ist.

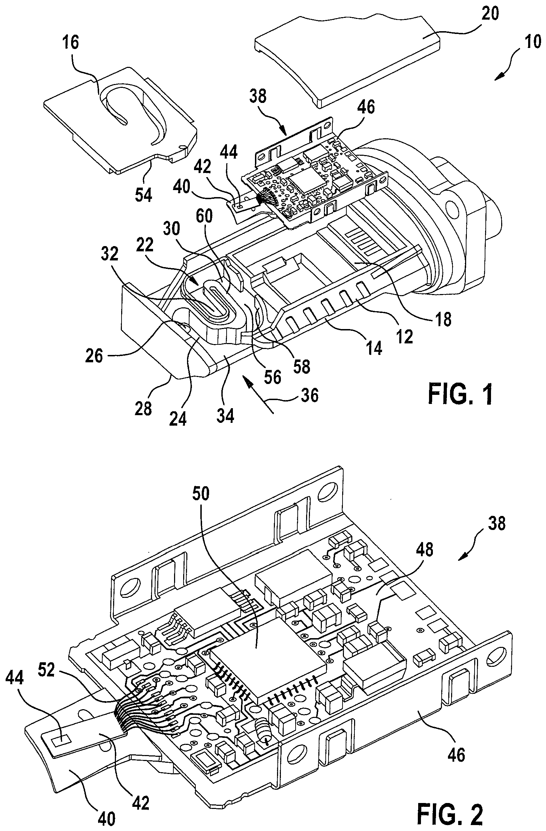

Ausführliche Beschreibung der Ausführungsformen der Erfindung Figur 1 zeigt eine perspektivische Ansicht einer Sensoranordnung 10 zur Bestimmung eines Parameters eines fluiden Mediums. Die Sensoranordnung 10 ist als Heißfilmluftmassenmesser ausgestaltet und umfasst ein als Steckfühler ausgebildetes Sensorgehäuse 12, welches beispielsweise in ein Strömungsrohr, insbesondere einen Ansaugtrakt einer Brennkraftmaschine, eingesteckt werden kann. Das Sensorgehäuse 12 weist einen Gehäusekörper 14, einen Messkanaldeckel 16, einen Elektronikraum 18 sowie einen Elektronikraumdeckel 20 zum Verschließen des Elektronikraums 18 auf. In dem Gehäusekörper 16 ist eine Kanalstruktur 22 ausgebildet. Die Kanalstruktur 22 weist einen Hauptkanal 24 auf, welcher in einem Hauptstromauslass 26 beispielsweise auf der Unterseite 30 bezogen auf die Darstellung in Figur 1 des Sensorgehäuses 12 mündet, sowie einen von dem Hauptkanal 24 abzweigenden Bypass- bzw. Messkanal 30, welcher in einen Bypass- oder Messkanalauslass 32 mündet, der separat oder aber integriert ausgeführt sein kann. Durch die Kanalstruktur 22 kann über eine Einlassöffnung 34, die im eingesetzten Zustand einer Hauptströmungsrichtung 36 des fluiden Mediums am Ort des Sensorgehäuses 12 entgegenweist, eine repräsentative Menge des fluiden Mediums strömen.

Figur 2 zeigt eine vergrößerte Darstellung eines Elektronikmoduls 38 der Sensoranordnung 10. In einem eingesetzten Zustand des Elektronikmoduls 38 ragt ein Sensorträger 40 in den Messkanal 30. In diesen Sensorträger 40 ist ein Sensorchip 42 derart eingelassen, dass eine als Sensorbereich 44 des Sensorchips 42 ausgebildete mikromechanische Sensormembran von dem fluiden Medium überströmbar ist. Der Sensorträger 40 ist mit dem Sensorchip 42 Bestandteil des Elektronikmoduls 38. Das Elektronikmodul 38 weist weiter ein gebogenes Bodenblech 46 sowie eine darauf angebrachte, beispielsweise aufgeklebte Leiterplatte 48 mit einer Ansteuer- und Auswerteschaltung 50 auf. Der Sensorchip 42 ist mit der Ansteuer- und Auswerteschaltung 50 über elektrische Verbindungen 52, welche hier als Drahtbonding ausgestaltet sind, elektrisch verbunden. Das derart entstandene Elektronikmodul 38 wird in den Elektronikraum 18 des Gehäusekörpers 14 - seinerseits fester Bestandteil des Sensorgehäuses 12 - eingebracht, beispielsweise eingeklebt. Dabei ragt der Sensorträger 40 in die Kanalstruktur 22 hinein. Anschließend wird der Elektronikraum 18 von dem Elektronikraumdeckel 20 verschlossen.

Wie in Figur 1 gezeigt, weist das Sensorgehäuse 12 mehrere Kanalwände 54, 56, 58, 60 auf, die den Messkanal 30 begrenzen. So weist das Sensorgehäuse 12 eine erste Kanalwand 54, die beispielsweise ein Teil oder Abschnitt des Messkanaldeckels 16 ist, eine zweite Kanalwand 56, die beispielsweise ein Teil oder Abschnitt eines Bodens des Sensorgehäuses 12 ist, eine dritte Kanalwand 58 und eine vierte Kanalwand 60, die den Messkanal 30 seitlich begrenzen, auf.

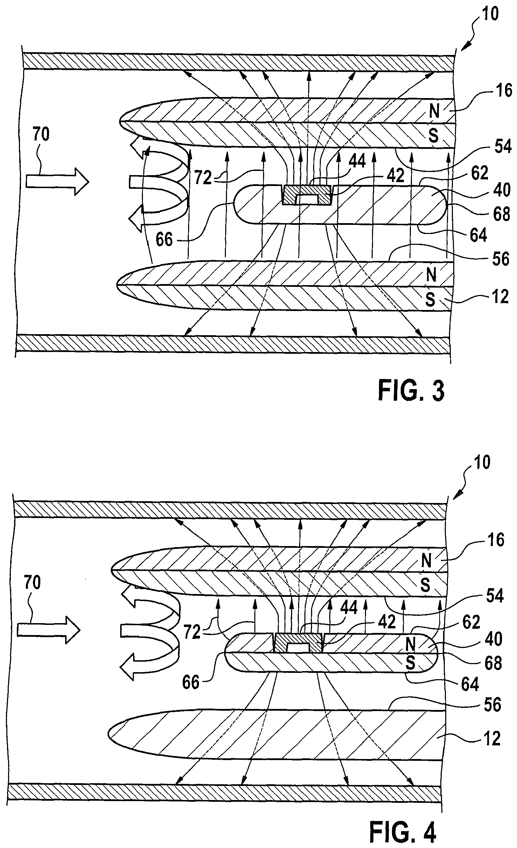

Figur 3 zeigt eine Querschnittsansicht des Sensors 10 gemäß einer ersten Ausführungsform. Der Sensorträger 40 weist eine Oberseite 62, eine Unterseite 64, eine Anströmkante 66 und eine Abströmkante 68 auf. Die Anströmkante 66 weist einer Hauptströmungsrichtung 70 des fluiden Mediums in dem Messkanal 30 entgegen oder zu. Der Sensorchip 42 ist in die Oberseite 62 eingelassen. Die erste Kanalwand 54 ist dem Sensorchip 42 zugewandt. Mit anderen Worten liegt die erste Kanalwand 54 dem Sensorchip 42 bzw. der Oberseite 62 des Sensorträgers 40 gegenüber. Die zweite Kanalwand 56 ist dem Sensorchip 42 abgewandt. Mit anderen Worten ist die zweite Kanalwand 56 der Unterseite 64 zugewandt bzw. liegt dieser gegenüber.

Zumindest im Bereich des Sensorträgers 40 weisen mindestens die erste Kanalwand 54 und die zweite Kanalwand 56 zumindest teilweise magnetische Eigenschaften auf. Im Bereich des Sensorträgers 40 ist dahingehend zu verstehen, dass die erste Kanalwand 54 und die zweite Kanalwand 56 zumindest in demjenigen Bereich magnetische Eigenschaften aufweisen, der sich parallel zu einer Abmessung des Sensorträgers 40 von der Anströmkante 66 bis zu der Abströmkante 68 in der Hauptströmungsrichtung 70 des fluiden Mediums in dem Messkanal 30 gesehen erstreckt. Es versteht sich, dass die erste Kanalwand 54 und die zweite Kanalwand 56 auch über diesen Bereich des Sensorträgers 40 hinausgehend magnetische Eigenschaften aufweisen können, wie beispielsweise in einem Bereich von 1 mm bis 50 mm stromaufwärts der Anströmkante 66 bezüglich der Hauptströmungsrichtung 70 des fluiden Mediums in dem Messkanal 30 und/oder in einem Bereich von 1 mm bis 50 stromabwärts der Abströmkante 68 bezüglich der Hauptströmungsrichtung 70 des fluiden Mediums in dem Messkanal 30. Dies kann dadurch realisiert sein, dass die erste Kanalwand 56 und die zweite Kanalwand 56 zumindest teilweise aus einem magnetischen Material hergestellt sind. Genauer sind die erste Kanalwand 54 und die zweite Kanalwand 56 zumindest teilweise aus einem ferromagnetischen Material hergestellt. Die erste Kanalwand 54 und die zweite Kanalwand 56 sind beispielsweise zumindest teilweise aus Kunststoff und einem ferromagnetischen Material hergestellt. Das ferromagnetische Material ist in Form von Partikeln in den Kunststoff eingebettet. Alternativ kann das ferromagnetische Material in Form von einem nicht näher gezeigten Einlegeteil in den Kunststoff eingebettet sein.

Die erste Kanalwand 54 und die zweite Kanalwand 56 sind dadurch zum Ausbilden eines geeigneten Magnetfels 72 senkrecht zu der Hauptströmungsrichtung 70 des fluiden Mediums in dem Messkanal 30 zumindest im Bereich des Sensorträgers 40 ausgebildet. Genauer sind die erste Kanalwand 54 und die zweite Kanalwand 56 zum Ausbilden eines geeigneten Magnetfels 72 senkrecht zu der Oberseite 62 zumindest im Bereich des Sensorträgers 40 ausgebildet. Elektrisch geladene Partikel, die sich in der Hauptströmungsrichtung 70 bewegen, erfahren in dem Magnetfeld 72 eine Lorentz-Kraft und werden senkrecht zur Hauptströmungsrichtung 70 und zu den Magnetfeldlinien des Magnetfelds 72 abgelenkt. Die Lorentz-Kraft wirkt bezüglich der Ansicht der Figur 3 senkrecht zur Schnittebene, d.h. in die Zeicheneben hinein oder heraus. Dadurch werden elektrisch geladene Partikel von dem Sensorbereich 44 weg abgelenkt, und zwar je nach resultierender Ladung in die Zeichenebene hinein oder heraus, siehe Figur 3.

Figur 4 zeigt eine Querschnittsansicht des Sensors 10 gemäß einer zweiten Ausführungsform, die nicht gemäß der beanspruchten Erfindung ist. Nachstehend werden lediglich die Unterschiede zu der ersten Ausführungsform beschrieben und gleiche Bauteile sind mit gleichen Bezugszeichen versehen. Bei dem Sensor 10 der zweiten Ausführungsform weist anstelle der zweiten Kanalwand 58 der Sensorträger 40 selbst zumindest teilweise magnetische Eigenschaften auf. Dies kann dadurch realisiert sein, dass die erste Kanalwand 56 und der Sensorträger 40 zumindest teilweise aus einem magnetischen Material hergestellt sind. Genauer sind die erste Kanalwand 54 und der Sensorträger 40 zumindest teilweise aus einem ferromagnetischen Material hergestellt. Die erste Kanalwand 54 und der Sensorträger 40 sind beispielsweise zumindest teilweise aus Kunststoff und einem ferromagnetischen Material hergestellt. Das ferromagnetische Material ist in Form von Partikeln in den Kunststoff eingebettet. Alternativ kann das ferromagnetische Material in Form von einem nicht näher gezeigten Einlegeteil in den Kunststoff eingebettet sein.

Die erste Kanalwand 54 und der Sensorträger 40 sind dadurch zum Ausbilden eines geeigneten Magnetfeldes 72 senkrecht zu der Hauptströmungsrichtung 70 des fluiden Mediums in dem Messkanal 30 zumindest im Bereich des Sensorträgers 40 angeordnet. Genauer sind die erste Kanalwand 54 und der Sensorträger 40 zum Ausbilden eines geeigneten Magnetfeldes 72 senkrecht zu der Oberseite 62 zumindest im Bereich des Sensorträgers 40 angeordnet. Elektrisch geladene Partikel, die sich in der Hauptströmungsrichtung 70 bewegen, erfahren in dem Magnetfeld 72 eine Lorentz-Kraft und werden senkrecht zur Hauptströmungsrichtung 70 und zu den Magnetfeldlinien des Magnetfelds 72 abgelenkt. Die Lorentz-Kraft wirkt bezüglich der Ansicht der Figur 4 senkrecht zur Schnittebene, d.h. in die Zeicheneben hinein oder heraus. Dadurch werden elektrisch geladene Partikel von dem Sensorbereich 44 weg abgelenkt, und zwar je nach resultierender Ladung in die Zeichenebene hinein oder heraus, siehe Figur 4.

## Patentansprüche

1. Sensor (10) zur Bestimmung wenigstens eines Parameters eines durch einen Messkanal (30) strömenden fluiden Mediums, insbesondere eines Ansaugluftmassenstroms einer Brennkraftmaschine, wobei der Sensor (10) ein Sensorgehäuse (12), insbesondere einen in ein Strömungsrohr eingebrachten oder einbringbaren Steckfühler, in dem der Messkanal (30) ausgebildet ist, und mindestens einen in dem Messkanal (30) angeordneten Sensorchip (42) zur Bestimmung des Parameters des fluiden Mediums aufweist, wobei das Sensorgehäuse (12) mehrere Kanalwände (54, 56, 58, 60) aufweist, die den Messkanal (30) begrenzen, wobei der Sensorchip (42) auf einem Sensorträger (40) angeordnet ist, wobei zumindest im Bereich des Sensorträgers (40) mindestens eine erste Kanalwand (54) der mehreren Kanalwände (54, 56, 58, 60) und eine zweite Kanalwand (56) der mehreren Kanalwände (54, 56, 58, 60), die sich von der ersten Kanalwand (54) unterscheidet, zumindest teilweise magnetische Eigenschaften aufweisen, wobei die erste Kanalwand (54) und die zweite Kanalwand (56) zumindest teilweise aus einem magnetischen Material hergestellt sind, **dadurch gekennzeichnet, dass** die erste Kanalwand (54) und die zweite Kanalwand (56) zum Ausbilden eines Magnetfeldes (72) senkrecht zu einer Hauptströmungsrichtung (70) des fluiden Mediums in dem Messkanal (30) sowie senkrecht zur Ebene eines Sensorbereichs (44) des Sensorchips (42) zumindest im Bereich des Sensorträgers (40) ausgebildet sind, wobei die erste Kanalwand (54) und die zweite Kanalwand (56) zumindest teilweise aus Kunststoff und einem ferromagnetischen Material hergestellt sind, wobei das ferromagnetische Material in Form von Partikeln oder in Form von einem Einlegeteil in den Kunststoff eingebettet ist.

2. Sensor (10) nach dem vorhergehenden Anspruch, wobei der Sensorträger (40) eine Oberseite (62) aufweist, wobei der Sensorchip (42) in die Oberseite (62) eingelassen ist, wobei die erste Kanalwand (54) und die zweite Kanalwand (56) zum Ausbilden eines Magnetfeldes senkrecht zu der Oberseite (62) zumindest im Bereich des Sensorträgers (40) ausgebildet sind.

3. Sensor (10) nach einem der vorhergehenden Ansprüche, wobei die erste Kanalwand (54) dem Sensorchip (42) zugewandt ist.

4. Sensor (10) nach dem vorhergehenden Anspruch, wobei die zweite Kanalwand (56) dem Sensorchip (42) abgewandt ist.

## Claims

1. Sensor (10) for determining at least one parameter of a fluid medium flowing through a measurement channel (30), in particular of an intake air mass flow of an internal combustion engine, wherein the sensor (10) has a sensor housing (12), in particular a plug-in probe which is inserted or insertable into a flow pipe and in which the measurement channel (30) is formed, and at least one sensor chip (42) which is arranged in the measurement channel (30) and which serves for determining the parameter of the fluid medium, wherein the sensor housing (12) has multiple channel walls (54, 56, 58, 60) that delimit the measurement channel (30), wherein the sensor chip (42) is arranged on a sensor carrier (40), wherein, at least in the region of the sensor carrier (40), at least one first channel wall (54) of the multiple channel walls (54, 56, 58, 60) and a second channel wall (56) of the multiple channel walls (54, 56, 58, 60), which differs from the first channel wall (54), at least partially have magnetic properties, wherein the first channel wall (54) and the second channel wall (56) are at least partially produced from a magnetic material, **characterized in that** the first channel wall (54) and the second channel wall (56) are designed to generate a magnetic field (72) perpendicular to a main flow direction (70) of the fluid medium in the measurement channel (30) and perpendicular to the plane of a sensor region (44) of the sensor chip (42) at least in the region of the sensor carrier (40), wherein the first channel wall (54) and the second channel wall (56) are produced at least partially from plastic and a ferromagnetic material, wherein the ferromagnetic material is embedded in the form of particles or in the form of an inlay part into the plastic.

2. Sensor (10) according to the preceding claim, wherein the sensor carrier (40) has a top side (62), wherein the sensor chip (42) is recessed into the top side (62), wherein the first channel wall (54) and the second channel wall (56) are designed to generate a magnetic field perpendicular to the top side (62) at least in the region of the sensor carrier (40).

3. Sensor (10) according to either one of the preceding claims, wherein the first channel wall (54) faces towards the sensor chip (42).

4. Sensor (10) according to the preceding claim, wherein the second channel wall (56) faces away from the sensor chip (42).

## Revendications

1. Capteur (10) permettant de déterminer au moins un paramètre d'un milieu fluide s'écoulant à travers un canal de mesure (30), en particulier d'un débit massique d'air d'admission d'un moteur à combustion interne, le capteur (10) présentant un boîtier de capteur (12), en particulier une sonde à insérer étant ou pouvant être introduite dans un tube d'écoulement dans lequel est réalisé le canal de mesure (30), et au moins une puce de capteur (42) disposée dans le canal de mesure (30) pour déterminer le paramètre du milieu fluide, le boîtier de capteur (12) présentant plusieurs parois de canal (54, 56, 58, 60) qui délimitent le canal de mesure (30), la puce de capteur (42) étant disposée sur un support de capteur (40), dans lequel, au moins au niveau du support de capteur (40), au moins une première paroi de canal (54) des plusieurs parois de canal (54, 56, 58, 60) et une deuxième paroi de canal (56) des plusieurs parois de canal (54, 56, 58, 60), qui est différente de la première paroi de canal (54), présentent des propriétés au moins partiellement magnétiques, la première paroi de canal (54) et la deuxième paroi de canal (56) étant fabriquées au moins partiellement en un matériau magnétique,
**caractérisé en ce que** la première paroi de canal (54) et la deuxième paroi de canal (56) sont réalisées pour réaliser un champ magnétique (72) perpendiculairement à une direction d'écoulement principale (70) du milieu fluide dans le canal de mesure (30) ainsi que perpendiculairement au plan d'une zone de capteur (44) de la puce de capteur (42) au moins au niveau du support de capteur (40), la première paroi de canal (54) et la deuxième paroi de canal (56) étant fabriquées au moins partiellement en matière plastique et en un matériau ferromagnétique, le matériau ferromagnétique étant incorporé dans la matière plastique sous forme de particules ou sous forme d'insert.

2. Capteur (10) selon la revendication précédente, dans lequel le support de capteur (40) présente une face supérieure (62), la puce de capteur (42) étant intégrée dans la face supérieure (62), la première paroi de canal (54) et la deuxième paroi de canal (56) étant réalisées pour réaliser un champ magnétique perpendiculairement à la face supérieure (62) au moins au niveau du support de capteur (40).

3. Capteur (10) selon l'une quelconque des revendications précédentes, dans lequel la première paroi de canal (54) est tournée vers la puce de capteur (42) .

4. Capteur (10) selon la revendication précédente, dans lequel la deuxième paroi de canal (56) est détournée de la puce de capteur (42).
